# EUROPÄISCHE PATENTSCHRIFT

(11) **EP 2 854 538 B1**
(45) Veröffentlichungstag und Bekanntmachung des Hinweises auf die Patenterteilung: **03.05.2017**
(21) Anmeldenummer: 13723814.3
(22) Anmeldetag: 22.05.2013
(51) Int. Cl.: A01N 43/713, A01N 43/80, A01N 43/10, A01N 41/10

(54) **HERBIZIDE ZUSAMMENSETZUNGEN ENTHALTEND N-(TETRAZOL-5-YL)ARYLCARBONSÄUREAMIDE**
HERBICIDE COMPOSITIONS CONTAINING N-(TETRAZOL-5-YL)ARYL CARBOXYLIC ACID AMIDES
COMPOSITIONS HERBICIDES COMPRENANT DES AMIDES D'ACIDE CARBOXYLIQUE DE N-(TÉTRAZOL-5-YL)ARYLE

(30) Priorität: 24.05.2012 EP 12169189
(43) Veröffentlichungstag der Anmeldung: 08.04.2015
(60) Teilanmeldung: 15158299.6
(73) Patentinhaber: Bayer CropScience AG, 40789 Monheim am Rhein (DE)
(72) Erfinder: VAN ALMSICK, Andreas, 61184 Karben (DE); GATZWEILER, Elmar, 61231 Bad Nauheim (DE); HACKER, Erwin, 88515 Langenslingen (DE); BRAUN, Ralf, 76857 Ramberg (DE); MENNE, Hubert, 55252 Mainz-Kastel (DE); TRABOLD, Klaus, 69123 Heidelberg (DE); WALDRAFF, Christian, 61118 Bad Vilbel (DE)
(74) Vertreter: BIP Patents
(86) Internationale Anmeldenummer: PCT/EP2013/060468
(87) Internationale Veröffentlichungsnummer: WO 2013/174845

(56) Entgegenhaltungen:
- WO-A1-2012/028579

## Beschreibung

Die vorliegende Erfindung betrifft agrochemisch wirksame herbizide Zusammensetzungen, Verfahren zu deren Herstellung sowie deren Verwendung zur Bekämpfung von Schadpflanzen.

WO 2012/028579 A1 und die prioritätsältere und nicht vorveröffentlichte EP11176378 offenbaren bestimmte N-(Tetrazol-5-yl)- und N-(Triazol-5-yl)arylcarbonsäureamide mit herbiziden Eigenschaften. Allerdings zeigen diese Wirkstoffe nicht immer eine ausreichende Wirkung gegen Schadpflanzen und/oder sie sind zum Teil nicht voll verträglich mit einigen wichtigen Kulturpflanzen, wie Getreidearten, Mais oder Reis. Aufgabe der vorliegenden Erfindung ist es daher, herbizide Zusammensetzungen bereitzustellen, in welchen die Wirksamkeit gegenüber Schadpflanzen und/oder Selektivität der oben genannten Herbizide gegenüber wichtigen Kulturpflanzen erhöht ist. Diese Aufgabe wird durch die nachfolgend beschriebenen erfindungsgemäßen herbiziden Zusammensetzungen enthaltend bestimmte N-(Tetrazol-5-yl)arylcarbonsäureamide, weitere Herbizide und gegebenenfalls Safener, gelöst.

Gegenstand der vorliegenden Erfindung sind herbizide Zusammensetzungen, enthaltend
(A) eine oder mehrere Verbindungen der Formel (I) (Komponente A) oder deren Salze, 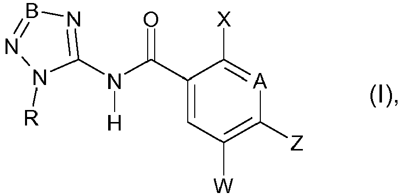 worin die Symbole und Indizes folgende Bedeutungen haben:
   - A: bedeutet CY,
   - B: bedeutet N,
   - X: bedeutet Chlor,
   - Y: SO₂CH₃, SOCH₃ oder SO₂Et,
   - Z: bedeutet Wasserstoff oder Methyl,
   - W: bedeutet Wasserstoff, und
   - R: bedeutet Methyl,
   sowie
(B) ein oder mehrere Herbizide (Komponente B) ausgewählt aus den Gruppen B1 bis B11:
   B1 1,3-Diketoverbindungen, bestehend aus
      prohexadione-calcium, trinexapac-ethyl,
      alloxydim, clethodim, cycloxydim, profoxydim, sethoxydim, tepraloxydim, tralkoxydim, mesotrione, sulcotrione, tefuryltrione, tembotrione, bicyclopyrone, pinoxaden,
   B2 (Sulfon)Amide, bestehend aus
      beflubutamide, bromobutide, dimethenamide, dimethenamide-P, diphenamide, napropamide, pethoxamid, N-[3-Chlor-4-(1-methylethyl)-phenyl]-2-methylpentanamid, naptalam, propyzamide,
      diflufenican, etobenzanid, flufenacet, mefenacet, mefluidide, pentanochlor, picolinafen, propanil, N-phenylphtalamic acid,
      acetochlor, alachlor, butachlor, dimethachlor, metazachlor, metolachlor, S-metolachlor, pretilachlor, propachlor, propisochlor, (2-chloro-6'-ethyl-N-isopropoxymethylaceto-o-toluidide), thenylchlor,
      asulam, carbaryl, carbetamide, chlorpropham, desmedipham, phenmedipham, propham,
      butylate, cycloate, dimepiperate, EPTC, esprocarb, methasulfocarb, molinate, orbencarb, pebulate, prosulfocarb, pyributicarb, thiobencarb, tri-allate, vernolate, amidosulfuron, azimsulfuron, bensulfuron-methyl, chlorimuron-ethyl, chlorsulfuron, cinosulfuron, cyclosulfamuron, ethametsulfuron-methyl, ethoxysulfuron, flazasulfuron, flucetosulfuron, flupyrsulfuron-methyl-sodium, foramsulfuron, halosulfuron-methyl, imazosulfuron, iodosulfuron-methyl-sodium, mesosulfuron-methyl, metsulfuron-methyl, monosulfuron, nicosulfuron, orthosulfamuron, oxasulfuron, primisulfuron-methyl, prosulfuron, pyrazosulfuron-ethyl, rimsulfuron, sulfometuron-methyl, sulfosulfuron, thifensulfuron-methyl, triasulfuron, tribenuron-methyl, trifloxysulfuron (sodium), triflusulfuron-methyl, tritosulfuron, (benzoic acid, 2-[[[[[4-methoxy-6-(methylthio)-2-pyrimidinyl]amino]carbonyl]amino]-sulfonyl]methyl-ester),
      flucarbazone-sodium, propoxycarbazone-sodium, thiencarbazone-methyl, cloransulam-methyl, diclosulam, florasulam, flumetsulam, metosulam, penoxsulam, pyroxsulam,
   B3 Arylnitrile, bestehend aus
      bromoxynil, dichlobenil, ioxynil, pyraclonil,
   B4 Azole, bestehend aus
      benzofenap , pyrazolynate, pyrazoxyfen, pyroxasulfone, topramezone, pyrasulfotole, 3-(3-chloro-5-{[1-methyl-3-(trifluormethyl)-1H-pyrazol-5-yl]oxy}phenoxy)-1-methyl-5-(trifluormethyl)-1H-pyrazole, 3-(3-iodo-5-{[1-methyl-3-(trifluormethyl)-1H-pyrazol-5-yl]oxy}phenoxy)-1-methyl-5-(trifluormethyl)-1H-pyrazole, 1-ethyl-3-(3-fluoro-5-{[1-methyl-3-(trifluormethyl)-1H-pyrazol-5-yl]oxy}phenoxy)-5-(trifluormethyl)-1H-pyrazole, pyraflufen-ethyl, fluazolate,
      isouron, isoxaben, isoxaflutole,
      imazamethabenzmethyl, imazamox, imazapic, imazapyr, imazaquin, imazethapyr, methazole, oxadiargyl, oxadiazon,
      amicarbazone, carfentrazone-ethyl, sulfentrazone, bencarbazone,
      amitrole, paclobutrazol, uniconazole, cafenstrole,
      fentrazamide,
   B5 weitere Herbizide, bestehend aus
      Aminocyclopyrachlor, N-acetylthiazolidine-4-carboxylic acid, acrolein, aminopyralid, ammonium pelargonate, ammonium sulfamat, aviglycine, benazolin, benfluralin, benfuresate, bentazone, benzobicyclon, 6-benzylaminopurine, borax, butralin, carvone, catechin, chlorflurenol-methyl, chloridazon, chlormequat chloride, chloracetic acid , chlorphthalim, chlorthal-dimethyl, cinidon-ethyl, cinmethylin, clofencet, clomazone, cloxyfonac, cyanamide, cyclanilide, 6-isopentylamino-purin, kinetin, zeatin, dalapon, daminozide, dazomet, n-decanol, difenzoquat metilsulfate, 2,6-diisopropylnaphtalene, dikegulac, dimethipin, dimethylarsenic acid, dinitramine, dinoterb, diquat dibromide, dithiopyr, DNOC, endothal, ethafluralin, ethofumesate, ethylchlozate, ferrous sulfate, flamprop-M-methyl, flufenpyr-ethyl, flumetralin, flumiclorac-pentyl, flumioxazin, flupropanate, flurenol, fluridone, flurochloridone, flurtamone, gibberillic acid, indanofan, isopropalin, isoprothiolane, maleic hydrazide, mepiquat chloride, metam, methylarsonic acid, 1-methylcyclopropene, methyl isothiocyanate, nitrophenolate mixture, nonanoic acid, norflurazon, oleic acid, oryzalin, oxaziclomefone, paraquat dichloride, pendimethalin, pentachlorophenol, pentoxazone, petroleum oils, prodiamine, n-propyl-dihydrojasmonate, pyridate, quinoclamine, sintofen, sodium chlorate, sulfuric acid, tar oils, TCA sodium, tecnazene, thiazopyr, triacontanol, trifluralin und urea sulfate,
   B6 (Het)Arylcarbonsäuren, bestehend aus
      dicamba, 2,3,6-TBA,
      clopyralid, fluroxypyr, inabenfide, picloram, triclopyr,
      quinclorac, quinmerac,
      indol-3-ylacetic acid, 4-indol-3-ylbutyric acid,
      2-(1-naphthyl)acetamide, 1-naphtylacetic acid, 2-naphthyloxyacetic acid,
   B7 organische Phosphorverbindungen, bestehend aus
      anilofos, bensulide, bilanafos, butimafos, fosamine, glufosinate, glufosinate-Salze, glufosinate-ammonium, glufosinate-sodium, L-glufosinate-ammonium, L-glufosinate-sodium, glyphosate, glyphosate-isopropyl-ammonium, glyphosate-ammonium, glyphosate-trimesium (=sulfosate), glyphosate-diammonium, glyphosate-potassium, piperophos, ethephon und tribufos,
   B8 Phenylether, bestehend aus
      acifluorfen-sodium, aclonifen, fluoroglycofen-ethyl, fomesafen, lactofen, oxyfluorfen, bifenox, ethoxyfen-ethyl,
      clomeprop,
      cloprop, dichlorprop, dichlorprop-P, mecoprop, mecoprop-P,
      4-CPA, 2,4-D, MCPA, MCPA-thioethyl,
      2,4-DB, MCPB,
      clodinafop-propargyl, cyhalofop-butyl, diclofop-methyl, diclofop-P-methyl, fenoxaprop-P-ethyl, fluazifop-butyl, fluazifop-P-butyl, haloxyfop, haloxyfop-P, metamifop, propaquizafop, quizalafop, quizalafop-P,
   B9 Pyrimidine, bestehend aus
      ancymidol, flurprimidol, pyrimisulfan,
      bispyribac-sodium, pyribenzoxim, pyriminobac-methyl, pyribambenz-isopropyl, pyribambenz-propyl,
      pyriftalid, pyrithiobac-sodium,
      benzfendizone, bromacil, butafenacil, lenacil, terbacil,
      2-chloro-4-fluoro-5-[3-methyl-2,6-dioxo-4-(trifluoromethyl)-3,6-dihydropyrimidin-1(2H)-yl]-N-[methyl(1-methylethyl)-sulfamoyl]benzamide,
   B10 (Thio)harnstoffe, bestehend aus
      cumyluron,
      chlorbromuron, chlorotoluron, chloroxuron, daimuron, diflufenzopyr, dimefuron, diuron, fluometuron, forchlorfenuron, isoproturon, karbutilate, linuron, methyldymron, metobromuron, metoxuron, monolinuron, neburon, siduron, thidiazuron methiuron,
      tebuthiuron,
      methabenzthiazuron,
   B11 Triazine, bestehend aus
      triaziflam, indaziflam,
      atrazine, cyanazine, propazine, simazine, terbuthylazine, trietazine,
      prometon,
      ametryn, dimethametryn, prometryn, simetryn, terbutryn,
      hexazinon, metamitron, metribuzin.

In einer weiteren Ausführungsform enthalten diese herbiziden Zusammensetzungen C) einen oder mehrere Safener (Komponente C) aus der Gruppe bestehend aus benoxacor (C1), cloquintocet-mexyl (C2), cyprosulfamide (C3), dichlormid (C4), fenclorim (C5), fenchlorazole (C6), furilazole (C7), isoxadifen-ethyl (C8), mefenpyr-diethyl (C9), 4-(dichloroacetyl)-1-oxa-4-azaspiro[4.5]decane der CAS 71526-07-3 (C10), 2,2,5-trimethyl-3-(dechloroacetyl)-1,3-oxazolidine der CAS 52836-31-4 (C11).

Die Komponenten B) und C) sind beispielsweise aus "The Pesticide Manual", 15th edition, The British Crop Protection Council and the Royal Soc. of Chemistry, und von der Website http://www.alanwood.net/pesticides/ bekannt.

Die erfindungsgemäßen herbiziden Zusammensetzungen können zusätzliche weitere Komponenten, beispielsweise Pflanzenschutzmittelwirkstoffe anderer Art und/oder im Pflanzenschutz übliche Zusatzstoffe und/oder Formulierungshilfsmittel, enthalten oder zusammen mit diesen eingesetzt werden.

Die Herbizide (A), (B) und gegebenenfalls die Safener (C) können auf bekannte Weise angewendet werden, beispielsweise gemeinsam (beispielsweise als Co-Formulierung oder als Tank-Mischung) oder auch zeitlich kurz hintereinander versetzt (Splitting), z.B. auf die Pflanzen, Pflanzenteile, Pflanzensamen oder die Fläche, auf der die Pflanzen wachsen. Möglich ist z.B. die Anwendung der Einzelwirkstoffe oder der Herbizid-Safener-Kombination in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die gemeinsame oder die zeitnahe Anwendung der Wirkstoffe der jeweiligen Kombination. Möglich ist auch die Anwendung der Einzelwirkstoffe oder der Herbizid-Safener-Kombination zur Saatgutbehandlung.

Gegenstand der vorliegenden Erfindung sind auch herbizide Zusammensetzungen, umfassend Stereoisomere und deren Gemische, die von Formel (I) oder von den Formeln der Komponente B umfasst sind. Solche Verbindungen der Formel (I) oder der Formeln der Komponente B enthalten beispielsweise ein oder mehrere asymmetrisch substituierte Kohlenstoff-Atome oder Sulfoxide. Die durch ihre spezifische Raumform definierten möglichen Stereoisomeren, wie Enantiomere und Diastereomere, sind alle von der Formel (I) oder von den Komponenten (B) und (C) umfasst; insbesondere auch die racemischen Gemische und - soweit Enantiomere möglich sind - beide Enantiomere und insbesondere das jeweils biologisch wirksame Enantiomer. Die einzelnen Stereoisomeren können nach üblichen Methoden aus Gemischen der Stereoisomeren erhalten oder auch durch stereoselektive Reaktionen in Kombination mit dem Einsatz von stereochemisch reinen Ausgangs- oder Hilfsstoffen hergestellt werden.

Beispiele für als Herbizid (A) verwendete Verbindungen sind in den folgenden Tabellen aufgeführt:

Darin bedeuten die verwendeten Abkürzungen:
Et = Ethyl Me = Methyl

**Tabelle 1: Verbindungen der allgemeinen Formel (I), worin A für CY und B für N und W für Wasserstoff steht**

| | | | | |
|---|---|---|---|---|
| 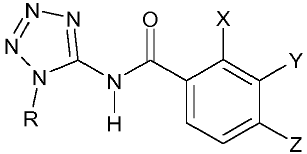 | | | | |

| Bsp.-Nr. | R | X | Y | Z |
|---|---|---|---|---|
| A1-49 | Me | Cl | SO₂Me | Me |
| A1-50 | Me | Cl | SO₂Et | Me |

Bevorzugte Herbizide der Gruppe B1 sind clethodim, sethoxydim, tepraloxydim, mesotrione, sulcotrione, tefuryltrione, tembotrione, bicyclopyrone, pinoxaden, tralkoxydim.
Besonders bevorzugte Herbizide der Gruppe B1 sind clethodim, sulcotrione, tefuryltrione, tembotrione, bicyclopyrone, pinoxaden.

Bevorzugte Herbizide der Gruppe B2 sind dimethenamide, dimethenamide-P, napropamide, pethoxamid, propyzamide, diflufenican, flufenacet, mefenacet, picolinafen, propanil, acetochlor, alachlor, butachlor, metazachlor, metolachlor, S-metolachlor, pretilachlor, thenylchlor, asulam, carbetamide, desmedipham, phenmedipham, esprocarb, molinate, prosulfocarb, thiobencarb, amidosulfuron, chlorimuron-ethyl, cyclosulfamuron, ethoxysulfuron, flupyrsulfuron-methyl-sodium, foramsulfuron, iodosulfuron-methyl-sodium, mesosulfuron-methyl, nicosulfuron, orthosulfamuron, prosulfuron, pyrazosulfuron-ethyl, rimsulfuron, trifloxysulfuron (sodium), flucarbazone-sodium, propoxycarbazone-sodium, thiencarbazone-methyl, florasulam, metosulam, penoxsulam, metsulfuron-methyl, sulfosulfuron, thifensulfuron-methyl, tribenuron-methyl, tritosulfuron, pyroxsulam.
Besonders bevorzugte Herbizide der Gruppe B2 sind dimethenamide-P, napropamide, diflufenican, flufenacet, mefenacet, acetochlor, metazachlor, S-metolachlor, asulam, desmedipham, phenmedipham, molinate, prosulfocarb, amidosulfuron, ethoxysulfuron, foramsulfuron, iodosulfuron-methyl-sodium, mesosulfuron-methyl, flucarbazone-sodium, propoxycarbazone-sodium, thiencarbazone-methyl, florasulam, metosulam, metsulfuron-methyl, sulfosulfuron, thifensulfuron-methyl, tribenuron-methyl, tritosulfuron, pyroxsulam.

Bevorzugte Herbizide der Gruppe B3 sind bromoxynil und ioxynil.

Bevorzugte Herbizide der Gruppe B4 sind benzofenap, topramezone, pyrasulfotole, isoxaflutole, imazamox, imazethapyr, oxadiargyl, oxadiazon, amicarbazone, carfentrazone-ethyl, sulfentrazone, uniconazole, cafenstrole, fentrazamide, 3-(3-chloro-5-{[1-methyl-3-(trifluormethyl)-1H-pyrazol-5-yl]oxy}phenoxy)-1-methyl-5-(trifluormethyl)-1H-pyrazole, 3-(3-iodo-5-{[1-methyl-3-(trifluormethyl)-1H-pyrazol-5-yl]oxy}phenoxy)-1-methyl-5-(trifluormethyl)-1H-pyrazole, 1-ethyl-3-(3-fluoro-5-{[1-methyl-3-(trifluormethyl)-1H-pyrazol-5-yl]oxy}phenoxy)-5-(trifluormethyl)-1H-pyrazole, pyraflufen-ethyl.
Besonders bevorzugte Herbizide der Gruppe B4 sind pyrasulfotole, isoxaflutole, oxadiargyl, oxadiazon, amicarbazone, fentrazamide, 3-(3-chloro-5-{[1-methyl-3-(trifluormethyl)-1H-pyrazol-5-yl]oxy}phenoxy)-1-methyl-5-(trifluormethyl)-1H-pyrazole, 3-(3-iodo-5-{[1-methyl-3-(trifluormethyl)-1H-pyrazol-5-yl]oxy}phenoxy)-1-methyl-5-(trifluormethyl)-1H-pyrazole, 1-ethyl-3-(3-fluoro-5-{[1-methyl-3-(trifluormethyl)-1H-pyrazol-5-yl]oxy}phenoxy)-5-(trifluormethyl)-1H-pyrazole, pyraflufen-ethyl, imazamox.

Bevorzugte Herbizide der Gruppe B5 sind aminopyralid, benazolin, benfuresate, bentazone, cinidon-ethyl, clomazone, diquat dibromide, ethofumesate, flumiclorac-pentyl, flumioxazin, flurtamone, oxaziclomefone, pendimethalin, pyridate und trifluralin. Besonders bevorzugte Herbizide der Gruppe B5 sind aminopyralid, benfuresate, ethofumesate, flurtamone und oxaziclomefone.

Bevorzugte Herbizide der Gruppe B6 sind dicamba, clopyralid, fluroxypyr, picloram, triclopyr, quinclorac.

Bevorzugte Herbizide der Gruppe B7 sind anilofos, glufosinate-ammonium und L-glufosinate-ammonium, glyphosate, glyphosate-isopropyl-ammonium, glyphosate-ammonium, glyphosate-trimesium (=sulfosate), glyphosate-diammonium, glyphosate-potassium.

Bevorzugte Herbizide der Gruppe B8 sind acifluorfen-sodium, aclonifen, fluoroglycofen-ethyl, oxyfluorfen, bifenox, dichlorprop-P, mecoprop-P, 2,4-D, MCPA, clodinafop-propargyl, cyhalofop-butyl, diclofop-methyl, diclofop-P-methyl, fenoxaprop-P-ethyl, fluazifop-P-butyl, quizalofop-P.
Besonders bevorzugte Herbizide der Gruppe B8 sind aclonifen, diclofop-methyl, diclofop-P-methyl, fenoxaprop-P-ethyl, MCPA, 2,4-D, clodinafop-ethyl.

Besonders bevorzugte Herbizide der Gruppe B9 sind bispyribac (sodium), pyriftalid, bromacil, lenacil, 2-chloro-4-fluoro-5-[3-methyl-2,6-dioxo-4-(trifluoromethyl)-3,6-dihydropyrimidin-1(2H)-yl]-N-[methyl(1-methylethyl)-sulfamoyl]benzamide,

Bevorzugte Herbizide der Gruppe B9 sind bispyribac (sodium), bromacil.

Bevorzugte Herbizide der Gruppe B10 sind cumyluron, daimuron, diuron, isoproturon, diflufenzopyr.
Bevorzugte Herbizide der Gruppe B11 sind atrazine, simazine, terbuthylazine, ametryn, terbutryn, metamitron, metribuzin.
Besonders bevorzugte Herbizide der Gruppe B11 sind metamitron, metribuzin, terbuthylazine.

In den erfindungsgemäßen herbiziden Zusammensetzungen beträgt die Aufwandmenge der Herbizide der allgemeinen Formel (I) (Komponente A) üblicherweise 1 bis 500 g Aktivsusbstanz (a. i.) pro Hektar, bevorzugt 2 bis 300 g a. i./ha, insbesondere bevorzugt 3 bis 200 g a. i./ha. Die Aufwandmenge der Herbizide der Komponente B beträgt üblicherweise 1 bis 5000 g Aktivsusbstanz pro Hektar, bevorzugt 2 bis 3000 g a. i./ha, insbesondere bevorzugt 3 bis 2000 g a. i./ha. Die Aufwandmenge der Safener der Komponente C beträgt üblicherweise 1 bis 500 g Aktivsusbstanz pro Hektar, bevorzugt 2 bis 400 g a. i./ha, insbesondere bevorzugt 3 bis 300 g a. i./ha.

Bei Anwendung der erfindungsgemäßen herbiziden Zusammensetzungen wird im Vorund Nachlaufverfahren ein sehr breites Spektrum an Schadpflanzen bekämpft, z.B. annuellen und perennierenden mono- oder dikotylen Unkräutern sowie an unerwünschten Kulturpflanzen. Die erfindungsgemäßen herbiziden Zusammensetzungen eignen sich besonders zum Einsatz in Kulturen wie Getreide, Mais, Reis, Soja, Raps, Zuckerrüben, Baumwolle, Zuckerrohr sowie für den Einsatz in Dauerkulturen, Plantagen und auf Nichtkulturland. Ebenso eigenen sie sich sehr gut für den Einsatz in transgenen Kulturen von Mais, Getreide, Zuckerrüben , Reis, Baumwolle sowie Glycine max. (z.B. RR-Soja oder LL-Soja) und deren Kreuzungen), Phaseolus, Pisum, Vicia und Arachis, oder Gemüsekulturen aus verschiedenen botanischen Gruppen wie Kartoffel, Lauch, Kohl, Karotte, Tomate, Zwiebel, sowie Dauer- und Plantagenkulturen wie Kern- und Steinobst, Beerenobst, Wein, Hevea, Bananen, Zuckerrohr, Kaffee, Tee, Citrus, Nussplantagen, Rasen, Palmenkulturen und Forstkulturen. Für die Anwendung der erfindungsgemäßen Herbizid-Safener-Kombinationen (A)+(B) sind diese Kulturen ebenfalls bevorzugt, besonders bevorzugt ist der Einsatz in Getreide (z.B. Weizen, Gerste, Roggen, Hafer), Reis, Mais, Hirse, Zuckerrübe, Zuckerrohr, Sonnenblume, Raps und Baumwolle. Die Herbizid-Safener-Kombinationen (A)+(B) sind auch einsetzbar in toleranten und nicht toleranten Mutantenkulturen und toleranten und nicht toleranten transgenen Kulturen, vorzugsweise von Mais, Reis, Getreide, Raps, Baumwolle, Zuckerrüben und Soja, z.B. solche die gegen Imidazolinon-Herbizide, Atrazin, Glufosinate, Glyphosate, 2,4 D, Dicamba sowie Herbiziden aus der Gruppe der Inhibitoren der Hydroxyphenylpyruvat-Dioxygenase, wie sulcotrione, mesotrione, tembotrione, tefuryltrione, benzobicyclon, bicyclopyrone und ketospiradox resistent sind.

Herbizid wirksame Menge bedeutet im Sinne der Erfindung eine Menge an einem oder mehreren Herbiziden, die geeignet ist, den Pflanzenwuchs negativ zu beeinflussen. Antidotisch wirksame Menge bedeutet im Sinne der Erfindung eine Menge an einem oder mehreren Safenern, die geeignet ist, die phytotoxische Wirkung von Pflanzenschutzmittelwirkstoffen (z.B. von Herbiziden) an Kulturpflanzen zu reduzieren.

Die in den erfindungsgemäßen herbiziden Zusammensetzungen enthaltenen Safener (C) können je nach ihren Eigenschaften auch zur Vorbehandlung des Saatgutes der Kulturpflanze (z.B. zur Beizung des Saatguts) verwendet werden oder vor der Saat in die Saatfurchen eingebracht oder zusammen mit dem Herbizid vor oder nach dem Auflaufen der Pflanzen angewendet werden. Vorauflaufbehandlung schließt sowohl die Behandlung der Anbaufläche (einschließlich eventuell auf der Anbaufläche befindlichen Wassers, z.B. bei Reisapplikationen) vor der Aussaat als auch die Behandlung der angesäten, aber noch nicht bewachsenen Anbauflächen ein. Bevorzugt ist die gemeinsame Anwendung mit dem Herbizid. Hierzu können Tankmischungen oder Fertigformulierungen eingesetzt werden.

In einer bevorzugten Ausführungsform werden das Saatgut (z.B. Körner, Samen oder vegetative Vermehrungsorgane wie Knollen oder Sprossteile mit Knospen) oder Setzlinge mit den Safenern (C), gegebenenfalls in Kombination mit anderen agrochemischen Wirkstoffen, vorbehandelt. Zur Vorbehandlung des Saatguts können die Wirkstoffe z.B. durch Beizung an das Saatgut gebracht oder die Wirkstoffe und das Saatgut können in Wasser oder andere Lösungsmittel gegeben, und die Wirkstoffe z.B. durch Anlagerung oder Diffusion im Tauchverfahren oder durch Quellen oder Vorkeimen aufgenommen werden. Zur Vorbehandlung von Setzlingen können die jungen Pflanzen z.B. durch Spritzen, Tauchen oder Gießen mit den Safenern, gegebenenfalls in Kombination mit anderen agrochemischen Wirkstoffen, in Kontakt gebracht und anschließend verpflanzt und gegebenenfalls mit den Herbiziden (A) und (B) nachbehandelt werden.

Die Saatgut- oder Setzlingsbehandlung kann mit den Safenern (C) alleine oder gemeinsam mit anderen agrochemischen Wirkstoffen - wie Fungiziden, Insektiziden oder Mitteln zur Pflanzenstärkung, Düngung oder zur Beschleunigung der Quell- und Keimungsvorgänge - erfolgen. Dabei können die Safener nach der Vorbehandlungsanwendung anschließend nochmals vor, nach oder gemeinsam mit einem oder mehreren Herbiziden der Formel (I) (A) und Herbiziden (B) eventuell auch in Kombination mit anderen bekannten Herbiziden angewandt werden. Durch die Vorbehandlung des Saatguts oder der Setzlinge kann eine verbesserte Langzeitwirkung der Safener erzielt werden.

Gegenstand der vorliegenden Erfindung ist somit weiterhin ein Verfahren zur Bekämpfung von unerwünschten Pflanzen in Pflanzenkulturen, das dadurch gekennzeichnet ist, dass die Komponenten (A), (B) und gegebenenfalls (C) der erfindungsgemäßen herbiziden Zusammensetzungen auf die Pflanzen (z.B. Schadpflanzen wie mono- oder dikotyle Unkräuter oder unerwünschte Kulturpflanzen), das Saatgut (z.B. Körner, Samen oder vegetative Vermehrungsorgane wie Knollen oder Sprossteile mit Knospen) oder die Fläche, auf der die Pflanzen wachsen (z.B. die Anbaufläche), ausgebracht werden, z.B. gemeinsam oder getrennt. Dabei können einer oder mehrere Safener (C), vor, nach oder gleichzeitig mit dem oder den Herbizid(en) der allgemeinen Formel (I) (A) und den Herbiziden (B) auf die Pflanzen, das Saatgut oder die Fläche, auf der die Pflanzen wachsen (z.B. die Anbaufläche), appliziert werden. In einer bevorzugten Ausführungsform werden die Safener (C) zur Saatgutbehandlung eingesetzt.

Unter unerwünschten Pflanzen sind alle Pflanzen zu verstehen, die an Orten wachsen, wo sie unerwünscht sind. Dies können z.B. Schadpflanzen (z.B. mono- oder dikotyle Unkräuter oder unerwünschte Kulturpflanzen) sein, z.B. auch solche, die gegen bestimmte herbizide Wirkstoffe wie Glyphosate, Atrazin, Glufosinate oder Imidazolinon-Herbizide resistent sind.

Monokotyle Unkräuter entstammen z.B. den Gattungen Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera. Dikotyle Unkräuter entstammen z.B. den Gattungen Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum, Euphorbia.

Gegenstand der Erfindung ist auch die Verwendung der erfindungsgemäßen herbiziden Zusammensetzungen zur Bekämpfung von unerwünschtem Pflanzenwuchs, vorzugsweise in Pflanzenkulturen.

Die erfindungsgemäßen herbiziden Zusammensetzungen können nach bekannten Verfahren z.B. als Mischformulierungen der Einzelkomponenten, gegebenenfalls mit weiteren Wirkstoffen, Zusatzstoffen und/oder üblichen Formulierungshilfsmitteln hergestellt werden, die dann in üblicher Weise mit Wasser verdünnt zur Anwendung gebracht werden, oder als sogenannte Tankmischungen durch gemeinsame Verdünnung der getrennt formulierten oder partiell getrennt formulierten Einzelkomponenten mit Wasser hergestellt werden. Ebenfalls möglich ist die zeitlich versetzte Anwendung (Splitapplikation) der getrennt formulierten oder partiell getrennt formulierten Einzelkomponenten. Möglich ist auch die Anwendung der Einzelkomponenten oder der herbiziden Zusammensetzungen in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die gemeinsame oder die zeitnahe Anwendung der Wirkstoffe der jeweiligen Kombination.

Die erfindungsgemäßen herbiziden Zusammensetzungen können auch zur Bekämpfung von Schadpflanzen in Kulturen von bekannten oder noch zu entwickelnden gentechnisch veränderten Pflanzen eingesetzt werden.

Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt. Weitere besondere Eigenschaften können in einer Toleranz oder Resistenz gegen abiotische Stressoren z. B. Hitze, Kälte, Trockenheit, Salz und ultraviolette Strahlung liegen.

Bevorzugt ist die Anwendung der erfindungsgemäßen herbiziden Zusammensetzungen in wirtschaftlich bedeutenden transgenen Kulturen von Nutz-und Zierpflanzen, z. B. von Getreide wie Weizen, Gerste, Roggen, Hafer, Hirse, Reis, Maniok und Mais oder auch Kulturen von Zuckerrübe, Baumwolle, Soja, Raps, Kartoffel, Tomate, Erbse und anderen Gemüsesorten.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen
- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche gegen bestimmte Herbizide vom Typ Glufosinate (vgl. z. B. EP-A-0242236, EP-A-242246) oder Glyphosate (WO 92/00377) oder der Sulfonylharnstoffe (EP-A-0257993, US-A-5013659) resistent sind,
- transgene Kulturpflanzen, beispielsweise Baumwolle, mit der Fähigkeit Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).
- gentechnisch veränderte Kulturpflanzen mit neuen Inhalts- oder Sekundärstoffen z. B. neuen Phytoalexinen, die eine erhöhte Krankheitsresistenz verursachen (EPA 309862, EPA0464461)
- gentechnisch veränderte Pflanzen mit reduzierter Photorespiration, die höhere Erträge und höhere Stresstoleranz aufweisen (EPA 0305398).
- Transgene Kulturpflanzen, die pharmazeutisch oder diagnostisch wichtige Proteine produzieren ("molecular pharming")
- transgene Kulturpflanzen, die sich durch höhere Erträge oder bessere Qualität auszeichnen
- transgene Kulturpflanzen die sich durch eine Kombinationen z. B. der o. g. neuen Eigenschaften auszeichnen ("gene stacking")

Zahlreiche molekularbiologische Techniken, mit denen neue transgene Pflanzen mit veränderten Eigenschaften hergestellt werden können, sind im Prinzip bekannt; siehe z. B. I. Potrykus und G. Spangenberg (eds.) Gene Transfer to Plants, Springer Lab Manual (1995), Springer Verlag Berlin, Heidelberg. oder Christou, "Trends in Plant Science" 1 (1996) 423-431).

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe von Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden, siehe z. B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codiereden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106). Die Expression der Nukleinsäuremoleküle kann auch in den Organellen der Pflanzenzellen stattfinden.

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h., sowohl monokotyle als auch dikotyle Pflanzen.

So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Vorzugsweise können die erfindungsgemäßen Zusammensetzungen in transgenen Kulturen eingesetzt werden, welche gegen Wuchsstoffe, wie z. B. Dicamba oder gegen Herbizide, die essentielle Pflanzenenzyme, z. B. Acetolactatsynthasen (ALS), EPSP Synthasen, Glutaminsynthasen (GS) oder Hydroxyphenylpyruvat Dioxygenasen (HPPD) hemmen, respektive gegen Herbizide aus der Gruppe der Sulfonylharnstoffe, der Glyphosate, Glufosinate oder Benzoylisoxazole und analogen Wirkstoffe, resistent sind.

Bei der Anwendung der erfindungsgemäßen Zusammensetzungen in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der Erfindung ist deshalb auch die Verwendung der erfindungsgemäßen Zusammensetzungen zur Bekämpfung von Schadpflanzen in transgenen Kulturpflanzen.

Bevorzugt ist die Anwendung der erfindungsgemäßen Zusammensetzungen in wirtschaftlich bedeutenden transgenen Kulturen von Nutz- und Zierpflanzen, z. B. von Getreide (z.B. Weizen, Gerste, Roggen, Hafer), Hirse, Reis, Maniok und Mais oder auch Kulturen von Zuckerrübe, Baumwolle, Soja, Raps, Kartoffel, Tomate, Erbse und anderen Gemüsekulturen.

Gegenstand der Erfindung ist deshalb auch die Verwendung der erfindungsgemäßen Zusammensetzungen zur Bekämpfung von Schadpflanzen in transgenen Kulturpflanzen oder Kulturpflanzen, die Toleranz durch Selektionszüchtung aufweisen.

Die Herbizide (A), (B) und die Safener (C) können gemeinsam oder getrennt in übliche Formulierungen z.B. zur Sprüh-, Gieß-, Spritz- und Saatgutbeizanwendung übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen. Die Formulierungen können die üblichen Hilfs- und Zusatzstoffe enthalten.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel könne z.B. auch organische Lösungsmittel als Hilfslösungsmittel verwendet werden. Als flüssige Lösungsmittel kommen im wesentlichen infrage: Aromaten, wie Xylol, Toluol, Alkylnaphthaline, chlorierte Aromaten oder chlorierte aliphatische Kohlenwasserstoffe, wie Chlorbenzole, Chlorethylene, oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid oder Dimethylsulfoxid, sowie Wasser.

Als feste Trägerstoffe kommen in Frage: z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen infrage: z.B. nicht ionogene und anionische Emulgatoren, wie Polyoxyethylen-Fettsäureester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen infrage: z.B. Ligninsulfitablaugen und Methylcellulose.

Es können in den Formulierungen Haftmittel wie Carboxymethylcellulose, natürliche und synthetische, pulverige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 Gew.-%.

Die Herbizide (A), (B) und die Safener (C) können als solche oder in ihren Formulierungen auch in Mischung mit anderen agrochemischen Wirkstoffen zur Bekämpfung von unerwünschtem Pflanzenwuchs, z.B. zur Unkrautbekämpfung oder zur Bekämpfung von unerwünschten Kulturpflanzen Verwendung finden, wobei z.B. Fertigformulierungen oder Tankmischungen möglich sind.

Auch Mischungen mit anderen bekannten Wirkstoffen wie Fungiziden, Insektiziden, Akariziden, Nematiziden, Schutzstoffen gegen Vogelfraß, Pflanzennährstoffen und Bodenstrukturverbesserungsmitteln sind möglich, ebenso mit im Pflanzenschutz üblichen Zusatzstoffen und Formulierungshilfsmitteln.

Die Herbizide (A), (B) und die Safener (C) können als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht üblicherweise, z.B. durch Gießen, Spritzen, Sprühen, Streuen.

Die Wirkstoffe können auf die Pflanzen, Pflanzenteile, das Saatgut oder die Anbaufläche (Ackerboden) ausgebracht werden, vorzugsweise auf das Saatgut oder die grünen Pflanzen und Pflanzenteile und gegebenenfalls zusätzlich auf den Ackerboden. Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame Formulierung der erfindungsgemäßen Kombination an Wirkstoffen (A), (B) und (C) hat den Vorteil der leichteren Anwendbarkeit, weil die Mengen der Komponenten bereits im optimalen Verhältnis zueinander eingestellt werden können. Außerdem können die Hilfsmittel in der Formulierung aufeinander optimal abgestimmt werden.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate sowie versprühbare Lösungen werden vor der Anwendung üblicherweise nicht mehr mit weiteren inerten Stoffen verdünnt.

### Biologische Beispiele:

### - Testbedingungen im Gewächshausversuch

Die Unkrautsamen wurden in Töpfen (8 cm Durchmesser) mit einem sandigen Lehmboden ausgesät, unter optimalen Bedingungen zur Keimung gebracht. Die Herbizid-Anwendungen erfolgten im Nachauflauf auf die bewachsenen Töpfe mit einem Spritzvolumen von 300 l/ha. Die Herbizide wurden allein und in Kombination ausgebracht. Der Versuch wurde im Gewächshaus unter optimalen Wachstumsbedingungen durchgeführt. Die herbiziden Effekte wurden nach im Vergleich von nicht behandelten und behandelten Pflanzen visuell bewertet. Die prozentualen Werte bedeuten: 0 % = keine Effekte, 100 % = komplettes Absterben der Pflanzen). Die Prozentwerte werden genutzt, um Wechselwirkungen zwischen Einzelbehandlungen und Behandlung in Kombination nach S.R. Colby, Weeds 15, pages 20 to 22 (1967).zu errechnen.

Die Ergebnisse sind in den nachfolgenden Tabellen dargestellt.

### - Testbedingungen im Feldversuch

Die Versuche wurden im Freiland (Parzellenversuche, 10 qm pro Parzelle, 2 Wiederholungen, Spritzanwendung mit 200-300 Liter Wasser je Hektar) durchgeführt. Die Kulturen und Unkräuter/-gräser wurden unter üblichen Feldbedingungen ausgesät. Daneben stellte sich noch eine natürliche Unkrautflora ein. Die Anwendung erfolgte im Nachauflaufverfahren. Die Aufwandmengen der herbiziden Wirkstoffe bei alleiniger Applikation bzw. in Kombinationen sind ebenfalls den nachfolgenden Tabellen zu entnehmen. Die Auswertungen wurden durch visuelle Bonituren (0-100 % Skalierung) nach der Applikation im Vergleich der behandelten zu den unbehandelten Versuchvarianten vorgenommen. Die Ergebnisse (als Mittelwert über alle Pflanzen /Parzelle und über 2 Wiederholungen) sind in der nachfolgenden Tabelle berichtet.

### Saatgutbehandlung

Saatkörner von Kulturpflanzen wurden mit den als Suspensions- oder Emulsionskonzentraten formulierten Safenern und Wasser in Flaschen gemischt und gut geschüttelt, so dass die Saatkörner gleichmässig mit der Formulierung des jeweiligen Safeners beschichtet wurden. Die Saatkörner bzw. die aufgelaufenen Pflanzen wurden dann im Vorauflauf oder Nachauflaufverfahren mit Herbiziden behandelt. Dabei zeigten zahlreiche erfindungsgemäße Herbizid-Safener-Zusammensetzungen eine gute Verträglichkeit gegenüber den Kulturpflanzen bei gleichzeitig guter herbizider Wirkung gegen ein breites Spektrum von Schadpflanzen.

Die Abkürzungen bedeuten:
- a.i.: = active ingredient
- E^{C}: = Erwartungswert nach Colby (E^{C} =A+B - AxB/100)
- Δ: = Differenz (%) von gemessenem Wert zu Erwartungswert (%) (gemessener Wert minus Erwartungswert)

### Bewertung :

- gemessener Wert E ist grösser als E^{C}: -> Synergismus (+Δ)
- gemessener Wert E ist gleich E^{C}: -> Additive Wirkung
- gemessener Wert E ist kleiner als E^{C}: -> Antagonismus(-Δ)

**Tabelle 5-53: Feld**

| Wirkstoff | Dosierung [g a.i./ha] | Wirkung [%] gegen Polygunum convolvulus |
|---|---|---|
| A1-49 | 25 | 35 |
| bromoxynil | 210 | 30 |
| A1-49 + bromoxynil | 25 + 210 | 78 (E^{C} = 55, Δ = 24) |

**Tabelle 5-54: Feld**

| Wirkstoff | Dosierung [g a.i./ha] | Wirkung [%] gegen Lolium multiflorum |
|---|---|---|
| A1-49 | 25 | 40 |
| MCPA | 280 | 0 |
| A1-49 + MCPA | 25 + 280 | 60 (E^{C} = 40, Δ = 20) |

## Patentansprüche

1. Herbizide Zusammensetzungen, enthaltend
(A) eine oder mehrere Verbindungen der Formel (I) (Komponente A) oder deren Salze, 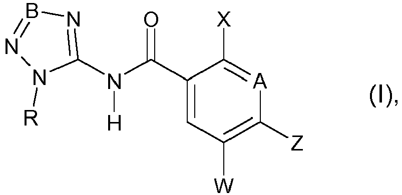 worin die Symbole und Indizes folgende Bedeutungen haben:
A bedeutet CY,
B bedeutet N,
X bedeutet Chlor,
Y SO₂CH₃, SOCH₃ oder SO₂Et,
Z bedeutet Wasserstoff oder Methyl,
W bedeutet Wasserstoff, und
R bedeutet Methyl,
sowie
(B) ein oder mehrere Herbizide (Komponente B) ausgewählt aus den Gruppen B1 bis B11:
B1 1,3-Diketoverbindungen, bestehend aus
prohexadione-calcium, trinexapac-ethyl,
alloxydim, clethodim, cycloxydim, profoxydim, sethoxydim, tepraloxydim, tralkoxydim, mesotrione, sulcotrione, tefuryltrione, tembotrione, bicyclopyrone, pinoxaden,
B2 (Sulfon)Amide, bestehend aus
beflubutamide, bromobutide, dimethenamide, dimethenamide-P, diphenamide, napropamide, pethoxamid, N-[3-Chlor-4-(1-methylethyl)-phenyl]-2-methylpentanamid, naptalam, propyzamide,
diflufenican, etobenzanid, flufenacet, mefenacet, mefluidide, pentanochlor, picolinafen, propanil, N-phenylphtalamic acid,
acetochlor, alachlor, butachlor, dimethachlor, metazachlor, metolachlor, S-metolachlor, pretilachlor, propachlor, propisochlor, (2-chloro-6'-ethyl-N-isopropoxymethylaceto-o-toluidide), thenylchlor,
asulam, carbaryl, carbetamide, chlorpropham, desmedipham, phenmedipham, propham,
butylate, cycloate, dimepiperate, EPTC, esprocarb, methasulfocarb, molinate, orbencarb, pebulate, prosulfocarb, pyributicarb, thiobencarb, tri-allate, vernolate, amidosulfuron, azimsulfuron, bensulfuron-methyl, chlorimuron-ethyl, chlorsulfuron, cinosulfuron, cyclosulfamuron, ethametsulfuron-methyl, ethoxysulfuron, flazasulfuron, flucetosulfuron, flupyrsulfuron-methyl-sodium, foramsulfuron, halosulfuron-methyl, imazosulfuron, iodosulfuron-methyl-sodium, mesosulfuron-methyl, metsulfuron-methyl, monosulfuron, nicosulfuron, orthosulfamuron, oxasulfuron, primisulfuron-methyl, prosulfuron, pyrazosulfuron-ethyl, rimsulfuron, sulfometuron-methyl, sulfosulfuron, thifensulfuron-methyl, triasulfuron, tribenuron-methyl, trifloxysulfuron (sodium), triflusulfuron-methyl, tritosulfuron, (benzoic acid, 2-[[[[[4-methoxy-6-(methylthio)-2-pyrimidinyl]amino]carbonyl]amino]-sulfonyl]methyl-ester), flucarbazone-sodium, propoxycarbazone-sodium, thiencarbazone-methyl, cloransulam-methyl, diclosulam, florasulam, flumetsulam, metosulam, penoxsulam, pyroxsulam,
B3 Arylnitrile, bestehend aus
bromoxynil, dichlobenil, ioxynil, pyraclonil,
B4 Azole, bestehend aus
benzofenap , pyrazolynate, pyrazoxyfen, pyroxasulfone, topramezone, pyrasulfotole, 3-(3-chloro-5-{[1-methyl-3-(trifluormethyl)-1H-pyrazol-5-yl]oxy}phenoxy)-1-methyl-5-(trifluormethyl)-1H-pyrazole, 3-(3-iodo-5-{[1-methyl-3-(trifluormethyl)-1H-pyrazol-5-yl]oxy}phenoxy)-1-methyl-5-(trifluormethyl)-1H-pyrazole, 1-ethyl-3-(3-fluoro-5-{[1-methyl-3-(trifluormethyl)-1H-pyrazol-5-yl]oxy}phenoxy)-5-(trifluormethyl)-1H-pyrazole, pyraflufen-ethyl, fluazolate,
isouron, isoxaben, isoxaflutole,
imazamethabenzmethyl, imazamox, imazapic, imazapyr, imazaquin, imazethapyr, methazole, oxadiargyl, oxadiazon,
amicarbazone, carfentrazone-ethyl, sulfentrazone, bencarbazone, amitrole, paclobutrazol, uniconazole, cafenstrole,
fentrazamide,
B5 weitere Herbizide, bestehend aus
Aminocyclopyrachlor, N-acetylthiazolidine-4-carboxylic acid, acrolein, aminopyralid, ammonium pelargonate, ammonium sulfamat, aviglycine, benazolin, benfluralin, benfuresate, bentazone, benzobicyclon, 6-benzylaminopurine, borax, butralin, carvone, catechin, chlorflurenol-methyl, chloridazon, chlormequat chloride, chloracetic acid , chlorphthalim, chlorthal-dimethyl, cinidon-ethyl, cinmethylin, clofencet, clomazone, cloxyfonac, cyanamide, cyclanilide, 6-isopentylamino-purin, kinetin, zeatin, dalapon, daminozide, dazomet, n-decanol, difenzoquat metilsulfate, 2,6-diisopropylnaphtalene, dikegulac, dimethipin, dimethylarsenic acid, dinitramine, dinoterb, diquat dibromide, dithiopyr, DNOC, endothal, ethafluralin, ethofumesate, ethylchlozate, ferrous sulfate, flamprop-M-methyl, flufenpyr-ethyl, flumetralin, flumiclorac-pentyl, flumioxazin, flupropanate, flurenol, fluridone, flurochloridone, flurtamone, gibberillic acid, indanofan, isopropalin, isoprothiolane, maleic hydrazide, mepiquat chloride, metam, methylarsonic acid, 1-methylcyclopropene, methyl isothiocyanate, nitrophenolate mixture, nonanoic acid, norflurazon, oleic acid, oryzalin, oxaziclomefone, paraquat dichloride, pendimethalin, pentachlorophenol, pentoxazone, petroleum oils, prodiamine, n-propyl-dihydrojasmonate, pyridate, quinoclamine, sintofen, sodium chlorate, sulfuric acid, tar oils, TCA sodium, tecnazene, thiazopyr, triacontanol, trifluralin und urea sulfate,
B6 (Het)Arylcarbonsäuren, bestehend aus
dicamba, 2,3,6-TBA,
clopyralid, fluroxypyr, inabenfide, picloram, triclopyr,
quinclorac, quinmerac,
indol-3-ylacetic acid, 4-indol-3-ylbutyric acid,
2-(1-naphthyl)acetamide, 1-naphtylacetic acid, 2-naphthyloxyacetic acid,
B7 organische Phosphorverbindungen, bestehend aus
anilofos, bensulide, bilanafos, butimafos, fosamine, glufosinate, glufosinate-Salze, glufosinate-ammonium, glufosinate-sodium, L-glufosinate-ammonium, L-glufosinate-sodium, glyphosate, glyphosate-isopropyl-ammonium, glyphosate-ammonium, glyphosate-trimesium (=sulfosate), glyphosate-diammonium, glyphosate-potassium, piperophos, ethephon und tribufos,
B8 Phenylether, bestehend aus
acifluorfen-sodium, aclonifen, fluoroglycofen-ethyl, fomesafen, lactofen, oxyfluorfen, bifenox, ethoxyfen-ethyl,
clomeprop,
cloprop, dichlorprop, dichlorprop-P, mecoprop, mecoprop-P,
4-CPA, 2,4-D, MCPA, MCPA-thioethyl,
2,4-DB, MCPB,
clodinafop-propargyl, cyhalofop-butyl, diclofop-methyl, diclofop-P-methyl, fenoxaprop-P-ethyl, fluazifop-butyl, fluazifop-P-butyl, haloxyfop, haloxyfop-P, metamifop, propaquizafop, quizalafop, quizalafop-P,
B9 Pyrimidine, bestehend aus
ancymidol, flurprimidol, pyrimisulfan,
bispyribac-sodium, pyribenzoxim, pyriminobac-methyl, pyribambenz-isopropyl, pyribambenz-propyl,
pyriftalid, pyrithiobac-sodium,
benzfendizone, bromacil, butafenacil, lenacil, terbacil, 2-chloro-4-fluoro-5-[3-methyl-2,6-dioxo-4-(trifluoromethyl)-3,6-dihydropyrimidin-1(2H)-yl]-N-[methyl(1-methylethyl)-sulfamoyl]benzamide,
B10 (Thio)harnstoffe, bestehend aus
cumyluron,
chlorbromuron, chlorotoluron, chloroxuron, daimuron, diflufenzopyr, dimefuron, diuron, fluometuron, forchlorfenuron, isoproturon, karbutilate, linuron, methyldymron, metobromuron, metoxuron, monolinuron, neburon, siduron, thidiazuron methiuron,
tebuthiuron,
methabenzthiazuron,
B11 Triazine, bestehend aus
triaziflam, indaziflam,
atrazine, cyanazine, propazine, simazine, terbuthylazine, trietazine, prometon,
ametryn, dimethametryn, prometryn, simetryn, terbutryn,
hexazinon, metamitron, metribuzin.

2. Herbizide Zusammensetzungen nach Anspruch 1, enthaltend als Komponente B ein oder mehrere Herbizide ausgewählt aus den Gruppen B1 bis B11:
B1 bestehend aus clethodim, sethoxydim, tepraloxydim, mesotrione, sulcotrione, tefuryltrione, tembotrione, bicyclopyrone, pinoxaden, tralkoxydim,
B2 bestehend aus dimethenamide, dimethenamide-P, napropamide, pethoxamid, propyzamide, diflufenican, flufenacet, mefenacet, picolinafen, propanil, acetochlor, alachlor, butachlor, metazachlor, metolachlor, S-metolachlor, pretilachlor, thenylchlor, asulam, carbetamide, desmedipham, phenmedipham, esprocarb, molinate, prosulfocarb, thiobencarb, amidosulfuron, chlorimuron-ethyl, cyclosulfamuron, ethoxysulfuron, flupyrsulfuron-methyl-sodium, foramsulfuron, iodosulfuron-methyl-sodium, mesosulfuron-methyl, nicosulfuron, orthosulfamuron, prosulfuron, pyrazosulfuron-ethyl, rimsulfuron, trifloxysulfuron (sodium), flucarbazone-sodium, propoxycarbazone-sodium, thiencarbazone-methyl, florasulam, metosulam, penoxsulam, metsulfuron-methyl, sulfosulfuron, thifensulfuron-methyl, tribenuronmethyl, tritosulfuron, pyroxsulam,
B3 bestehend aus bromoxynil und ioxynil.
B4 bestehend aus benzofenap, topramezone, pyrasulfotole, isoxaflutole, imazamox, imazethapyr, oxadiargyl, oxadiazon, amicarbazone, carfentrazone-ethyl, sulfentrazone, uniconazole, cafenstrole, fentrazamide, 3-(3-chloro-5-{[1-methyl-3-(trifluormethyl)-1H-pyrazol-5-yl]oxy}phenoxy)-1-methyl-5-(trifluormethyl)-1H-pyrazole, 3-(3-iodo-5-{[1-methyl-3-(trifluormethyl)-1H-pyrazol-5-yl]oxy}phenoxy)-1-methyl-5-(trifluormethyl)-1H-pyrazole, 1-ethyl-3-(3-fluoro-5-{[1-methyl-3-(trifluormethyl)-1H-pyrazol-5-yl]oxy}phenoxy)-5-(trifluormethyl)-1H-pyrazole, pyraflufen-ethyl,
B5 bestehend aus aminopyralid, benazolin, benfuresate, bentazone, cinidon-ethyl, clomazone, diquat dibromide, ethofumesate, flumiclorac-pentyl, flumioxazin, flurtamone, oxaziclomefone, pendimethalin, pyridate und trifluralin,
B6 bestehend aus dicamba, clopyralid, fluroxypyr, picloram, triclopyr, quinclorac,
B7 bestehend aus anilofos, glufosinate-ammonium und L-glufosinate-ammonium, glyphosate, glyphosate-isopropyl-ammonium, glyphosate-ammonium, glyphosate-trimesium (=sulfosate), glyphosate-diammonium, glyphosate-potassium,
B8 bestehend aus acifluorfen-sodium, aclonifen, fluoroglycofen-ethyl, oxyfluorfen, bifenox, dichlorprop-P, mecoprop-P, 2,4-D, MCPA, clodinafop-propargyl, cyhalofop-butyl, diclofop-methyl, diclofop-P-methyl, fenoxaprop-P-ethyl, fluazifop-P-butyl, quizalofop-P,
B9 bestehend aus bispyribac (sodium), pyriftalid, bromacil, lenacil, 2-chloro-4-fluoro-5-[3-methyl-2,6-dioxo-4-(trifluoromethyl)-3,6-dihydropyrimidin-1(2H)-yl]-N-[methyl(1-methylethyl)-sulfamoyl]benzamide,
B10 bestehend aus cumyluron, daimuron, diuron, isoproturon, diflufenzopyr,
B11 bestehend aus atrazine, simazine, terbuthylazine, ametryn, terbutryn, metamitron, metribuzin.

3. Herbizide Zusammensetzungen nach Anspruch 1 oder 2, enthaltend als Komponente B ein oder mehrere Herbizide ausgewählt aus den Gruppen B1, B2, B4, B5, B8, B9 und B11:
B1 bestehend aus clethodim, sulcotrione, tefuryltrione, tembotrione, bicyclopyrone, pinoxaden,
B2 bestehend aus dimethenamide-P, napropamide, diflufenican, flufenacet, mefenacet, acetochlor, metazachlor, S-metolachlor, asulam, desmedipham, phenmedipham, molinate, prosulfocarb, amidosulfuron, ethoxysulfuron, foramsulfuron, iodosulfuron-methyl-sodium, mesosulfuron-methyl, flucarbazone-sodium, propoxycarbazone-sodium, thiencarbazone-methyl, florasulam, metosulam, metsulfuron-methyl, sulfosulfuron, thifensulfuron-methyl, tribenuron-methyl, tritosulfuron, pyroxsulam,
B4 bestehend aus pyrasulfotole, isoxaflutole, oxadiargyl, oxadiazon, amicarbazone, fentrazamide, 3-(3-chloro-5-{[1-methyl-3-(trifluormethyl)-1H-pyrazol-5-yl]oxy}phenoxy)-1-methyl-5-(trifluormethyl)-1H-pyrazole, 3-(3-iodo-5-{[1-methyl-3-(trifluormethyl)-1H-pyrazol-5-yl]oxy}phenoxy)-1-methyl-5-(trifluormethyl)-1H-pyrazole, 1-ethyl-3-(3-fluoro-5-{[1-methyl-3-(trifluormethyl)-1H-pyrazol-5-yl]oxy}phenoxy)-5-(trifluormethyl)-1H-pyrazole, pyraflufen-ethyl, imazamox,
B5 bestehend aus aminopyralid, benfuresate, ethofumesate, flurtamone und oxaziclomefone,
B8 bestehend aus aclonifen, diclofop-methyl, diclofop-P-methyl, fenoxaprop-P-ethyl, MCPA, 2,4-D, clodinafop-ethyl,
B9 bestehend aus bispyribac (sodium), bromacil,
B11 bestehend aus metamitron, metribuzin, terbuthylazine.

4. Herbizide Zusammensetzungen nach einem der Ansprüche 1 bis 3, enthaltend zusätzlich als Komponente C einen oder mehrere Safener aus der Gruppe bestehend aus benoxacor, cloquintocet-mexyl, cyprosulfamide, dichlormid, fenclorim, fenchlorazole, furilazole, isoxadifen-ethyl, mefenpyr-diethyl, 4-(dichloroacetyl)-1-oxa-4-azaspiro[4.5]decane, 2,2,5-trimethyl-3-(dechloroacetyl)-1,3-oxazolidine.

5. Verfahren zur Bekämpfung von Schadpflanzen in Kulturen, **dadurch gekennzeichnet, daß** man eine herbizid wirksame Menge einer herbiziden Zusammensetzung gemäß einem oder mehreren der Ansprüche 1 bis 4 auf die Schadpflanzen, Pflanzen, Pflanzensamen oder die Fläche, auf der die Pflanzen wachsen, aufbringt.

6. Verfahren gemäß Anspruch 5, **dadurch gekennzeichnet, daß** die Pflanzen aus der Gruppe Zuckerrohr, Mais, Weizen, Roggen, Gerste, Hafer, Reis, Sorghum, Baumwolle und Soja stammen.

7. Verfahren gemäß Anspruch 5 oder 6 **dadurch gekennzeichnet, daß** die Pflanzen gentechnisch verändert sind.

## Claims

1. Herbicidal compositions comprising
(A) one or more compounds of the formula (I) (component A) or salts thereof 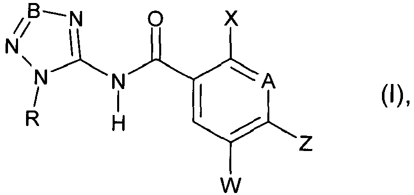 in which the symbols and indices are each defined as follows:
A represents CY,
B represents N,
X represents chlorine,
Y SO₂CH₃, SOCH₃ or SO₂Et,
Z represents hydrogen or methyl,
W represents hydrogen, and
R represents methyl,
and
(B) one or more herbicides (component B) selected from groups B1 to B11:
B1 1,3-diketo compounds, consisting of
prohexadione-calcium, trinexapac-ethyl, alloxydim, clethodim, cycloxydim, profoxydim, sethoxydim, tepraloxydim, tralkoxydim, mesotrione, sulcotrione, tefuryltrione, tembotrione, bicyclopyrone, pinoxaden,
B2 (sulfon)amides, consisting of
beflubutamide, bromobutide, dimethenamide, dimethenamide-P, diphenamide, napropamide, pethoxamid, N-[3-chloro-4-(1-methylethyl)-phenyl]-2-methylpentanamide, naptalam, propyzamide,
diflufenican, etobenzanid, flufenacet, mefenacet, mefluidide, pentanochlor, picolinafen, propanil, N-phenylphthalamic acid,
acetochlor, alachlor, butachlor, dimethachlor, metazachlor, metolachlor, S-metolachlor, pretilachlor, propachlor, propisochlor, (2-chloro-6'-ethyl-N-isopropoxymethylaceto-o-toluidide), thenylchlor, asulam, carbaryl, carbetamide, chlorpropham, desmedipham, phenmedipham, propham,
butylate, cycloate, dimepiperate, EPTC, esprocarb, methasulfocarb, molinate, orbencarb, pebulate, prosulfocarb, pyributicarb, thiobencarb, tri-allate, vernolate,
amidosulfuron, azimsulfuron, bensulfuron-methyl, chlorimuron-ethyl, chlorsulfuron, cinosulfuron, cyclosulfamuron, ethametsulfuron-methyl, ethoxysulfuron, flazasulfuron, flucetosulfuron, flupyrsulfuron-methyl-sodium, foramsulfuron, halosulfuron-methyl, imazosulfuron, iodosulfuron-methyl-sodium, mesosulfuron-methyl, metsulfuron-methyl, monosulfuron, nicosulfuron, orthosulfamuron, oxasulfuron, primisulfuron-methyl, prosulfuron, pyrazosulfuron-ethyl, rimsulfuron, sulfometuron-methyl, sulfosulfuron, thifensulfuron-methyl, triasulfuron, tribenuron-methyl, trifloxysulfuron (sodium), triflusulfuron-methyl, tritosulfuron, (benzoic acid, 2-[[[[[4-methoxy-6-(methylthio)-2-pyrimidinyl]amino]carbonyl]amino]sulfonyl]methyl ester),
flucarbazone-sodium, propoxycarbazone-sodium, thiencarbazone-methyl,
cloransulam-methyl, diclosulam, florasulam, flumetsulam, metosulam, penoxsulam, pyroxsulam,
B3 arylnitriles, consisting of
bromoxynil, dichlobenil, ioxynil, pyraclonil,
B4 azoles, consisting of
benzofenap, pyrazolynate, pyrazoxyfen, pyroxasulfone, topramezone, pyrasulfotole, 3-(3-chloro-5-{[1-methyl-3-(trifluoromethyl)-1H-pyrazol-5-yl]oxy}phenoxy)-1-methyl-5-(trifluoromethyl)-1H-pyrazole, 3-(3-iodo-5-{[1-methyl-3-(trifluoromethyl)-1H-pyrazol-5-yl]oxy}phenoxy)-1-methyl-5-(trifluoromethyl)-1H-pyrazole, 1-ethyl-3-(3-fluoro-5-{[1-methyl-3-(trifluoromethyl)-1H-pyrazol-5-yl]oxy}phenoxy)-5-(trifluoromethyl)-1H-pyrazole,
pyraflufen-ethyl, fluazolate,
isouron, isoxaben, isoxaflutole,
imazamethabenzmethyl, imazamox, imazapic, imazapyr, imazaquin, imazethapyr,
methazole, oxadiargyl, oxadiazon,
amicarbazone, carfentrazone-ethyl, sulfentrazone, bencarbazone,
amitrole, paclobutrazol, uniconazole, cafenstrole, fentrazamide,
B5 other herbicides, consisting of
aminocyclopyrachlor, N-acetylthiazolidine-4-carboxylic acid, acrolein, aminopyralid, ammonium pelargonate, ammonium sulfamate, aviglycine, benazolin, benfluralin, benfuresate, bentazone, benzobicyclon, 6-benzylaminopurine, borax, butralin, carvone, catechin, chlorflurenol-methyl, chloridazon, chlormequat chloride, chloroacetic acid, chlorphthalim, chlorthal-dimethyl, cinidon-ethyl, cinmethylin, clofencet, clomazone, cloxyfonac, cyanamide, cyclanilide, 6-isopentylaminopurin, kinetin, zeatin, dalapon, daminozide, dazomet, n-decanol, difenzoquat metilsulfate, 2,6-diisopropylnaphthalene, dikegulac, dimethipin, dimethylarsenic acid, dinitramine, dinoterb, diquat dibromide, dithiopyr, DNOC, endothal, ethafluralin, ethofumesate, ethylchlozate, ferrous sulfate, flamprop-M-methyl, flufenpyr-ethyl, flumetralin, flumiclorac-pentyl, flumioxazin, flupropanate, flurenol, fluridone, flurochloridone, flurtamone, gibberillic acid, indanofan, isopropalin, isoprothiolane, maleic hydrazide, mepiquat chloride, metam, methylarsonic acid, 1-methylcyclopropene, methyl isothiocyanate, nitrophenolate mixture, nonanoic acid, norflurazon, oleic acid, oryzalin, oxaziclomefone, paraquat dichloride, pendimethalin, pentachlorophenol, pentoxazone, petroleum oils, prodiamine, n-propyl dihydrojasmonate, pyridate, quinoclamine, sintofen, sodium chlorate, sulfuric acid, tar oils, TCA sodium, tecnazene, thiazopyr, triacontanol, trifluralin and urea sulfate,
B6 (het)arylcarboxylic acids, consisting of dicamba, 2,3,6-TBA,
clopyralid, fluroxypyr, inabenfide, picloram, triclopyr,
quinclorac, quinmerac,
indol-3-ylacetic acid, 4-indol-3-ylbutyric acid, 2-(1-naphthyl)acetamide, 1-naphthylacetic acid, 2-naphthyloxyacetic acid,
B7 organic phosphorus compounds, consisting of anilofos, bensulide, bilanafos, butimafos, fosamine, glufosinate, glufosinate salts, glufosinate-ammonium, glufosinate-sodium, L-glufosinate-ammonium, L-glufosinate-sodium, glyphosate, glyphosate-isopropyl-ammonium, glyphosate-ammonium, glyphosate-trimesium (=sulfosate), glyphosate-diammonium, glyphosate-potassium, piperophos, ethephon and tribufos,
B8 phenyl ether, consisting of
acifluorfen-sodium, aclonifen, fluoroglycofen-ethyl, fomesafen, lactofen, oxyfluorfen,
bifenox, ethoxyfen-ethyl,
clomeprop,
cloprop, dichlorprop, dichlorprop-P, mecoprop, mecoprop-P,
4-CPA, 2,4-D, MCPA, MCPA-thioethyl,
2,4-DB, MCPB,
clodinafop-propargyl, cyhalofop-butyl, diclofop-methyl, diclofop-P-methyl, fenoxaprop-P-ethyl, fluazifop-butyl, fluazifop-P-butyl, haloxyfop, haloxyfop-P, metamifop, propaquizafop, quizalafop, quizalafop-P,
B9 pyrimidines, consisting of
ancymidol, flurprimidol, pyrimisulfan,
bispyribac-sodium, pyribenzoxim, pyriminobac-methyl, pyribambenz-isopropyl, pyribambenz-propyl, pyriftalid, pyrithiobac-sodium,
benzfendizone, bromacil, butafenacil, lenacil, terbacil,
2-chloro-4-fluoro-5-[3-methyl-2,6-dioxo-4-(trifluoromethyl)-3,6-dihydropyrimidin-1(2H)-yl]-N-[methyl(1-methylethyl)-sulfamoyl]benzamide,
B10 (thio)ureas, consisting of
cumyluron,
chlorbromuron, chlorotoluron, chloroxuron, daimuron, diflufenzopyr, dimefuron, diuron, fluometuron, forchlorfenuron, isoproturon, karbutilate, linuron, methyldymron, metobromuron, metoxuron, monolinuron, neburon, siduron, thidiazuron,
methiuron,
tebuthiuron,
methabenzthiazuron,
B11 triazines, consisting of
triaziflam, indaziflam,
atrazine, cyanazine, propazine, simazine, terbuthylazine, trietazine,
prometon,
ametryn, dimethametryn, prometryn, simetryn, terbutryn, hexazinon, metamitron, metribuzin.

2. Herbicidal compositions according to claim 1 comprising, as component B, one or more herbicides selected from groups B1 to B11:
B1 consisting of clethodim, sethoxydim, tepraloxydim, mesotrione, sulcotrione, tefuryltrione, tembotrione, bicyclopyrone, pinoxaden, tralkoxydim,
B2 consisting of dimethenamide, dimethenamide-P, napropamide, pethoxamid, propyzamide, diflufenican, flufenacet, mefenacet, picolinafen, propanil, acetochlor, alachlor, butachlor, metazachlor, metolachlor, S-metolachlor, pretilachlor, thenylchlor, asulam, carbetamide, desmedipham, phenmedipham, esprocarb, molinate, prosulfocarb, thiobencarb, amidosulfuron, chlorimuron-ethyl, cyclosulfamuron, ethoxysulfuron, flupyrsulfuron-methyl-sodium, foramsulfuron, iodosulfuron-methyl-sodium, mesosulfuron-methyl, nicosulfuron, orthosulfamuron, prosulfuron, pyrazosulfuron-ethyl, rimsulfuron, trifloxysulfuron (sodium), flucarbazone-sodium, propoxycarbazone-sodium, thiencarbazone-methyl, florasulam, metosulam, penoxsulam, metsulfuron-methyl, sulfosulfuron, thifensulfuron-methyl, tribenuron-methyl, tritosulfuron, pyroxsulam,
B3 consisting of bromoxynil and ioxynil.
B4 consisting of benzofenap, topramezone, pyrasulfotole, isoxaflutole, imazamox, imazethapyr, oxadiargyl, oxadiazon, amicarbazone, carfentrazone-ethyl, sulfentrazone, uniconazole, cafenstrole, fentrazamide, 3-(3-chloro-5-{[1-methyl-3-(trifluoromethyl)-1H-pyrazol-5-yl]oxy}phenoxy)-1-methyl-5-(trifluoromethyl)-1H-pyrazole, 3-(3-iodo-5-{[1-methyl-3-(trifluoromethyl)-1H-pyrazol-5-yl]oxy}phenoxy)-1-methyl-5-(trifluoromethyl)-1H-pyrazole, 1-ethyl-3-(3-fluoro-5-{[1-methyl-3-(trifluoromethyl)-1H-pyrazol-5-yl]oxy}phenoxy)-5-(trifluoromethyl)-1H-pyrazole, pyraflufen-ethyl,
B5 consisting of aminopyralid, benazolin, benfuresate, bentazone, cinidon-ethyl, clomazone, diquat dibromide, ethofumesate, flumiclorac-pentyl, flumioxazin, flurtamone, oxaziclomefone, pendimethalin, pyridate and trifluralin,
B6 consisting of dicamba, clopyralid, fluroxypyr, picloram, triclopyr, quinclorac,
B7 consisting of anilofos, glufosinate-ammonium and L-glufosinate-ammonium, glyphosate, glyphosate-isopropyl-ammonium, glyphosate-ammonium, glyphosate-trimesium (=sulfosate), glyphosate-diammonium, glyphosate-potassium,
B8 consisting of acifluorfen-sodium, aclonifen, fluoroglycofen-ethyl, oxyfluorfen, bifenox, dichlorprop-P, mecoprop-P, 2,4-D, MCPA, clodinafop-propargyl, cyhalofop-butyl, diclofop-methyl, diclofop-P-methyl, fenoxaprop-P-ethyl, fluazifop-P-butyl, quizalofop-P,
B9 consisting of bispyribac (sodium), pyriftalid, bromacil,
lenacil, 2-chloro-4-fluoro-5-[3-methyl-2,6-dioxo-4-(trifluoromethyl)-3,6-dihydropyrimidin-1(2H)-yl]-N-[methyl(1-methylethyl)-sulfamoyl]benzamide,
B10 consisting of cumyluron, daimuron, diuron, isoproturon, diflufenzopyr,
B11 consisting of atrazine, simazine, terbuthylazine, ametryn, terbutryn, metamitron, metribuzin.

3. Herbicidal compositions according to Claim 1 or 2 comprising, as component B, one or more herbicides selected from groups B1, B2, B4, B5, B8, B9 and B11:
B1 consisting of clethodim, sulcotrione, tefuryltrione, tembotrione, bicyclopyrone, pinoxaden,
B2 consisting of dimethenamide-P, napropamide, diflufenican, flufenacet, mefenacet, acetochlor, metazachlor, S-metolachlor, asulam, desmedipham, phenmedipham, molinate, prosulfocarb, amidosulfuron, ethoxysulfuron, foramsulfuron, iodosulfuron-methyl-sodium, mesosulfuron-methyl, flucarbazone-sodium, propoxycarbazone-sodium, thiencarbazone-methyl, florasulam, metosulam, metsulfuron-methyl, sulfosulfuron, thifensulfuron-methyl, tribenuron-methyl, tritosulfuron, pyroxsulam,
B4 consisting of pyrasulfotole, isoxaflutole, oxadiargyl, oxadiazon, amicarbazone, fentrazamide, 3-(3-chloro-5-{[1-methyl-3-(trifluoromethyl)-1H-pyrazol-5-yl]oxy}phenoxy)-1-methyl-5-(trifluoromethyl)-1H-pyrazole, 3-(3-iodo-5-{[1-methyl-3-(trifluoromethyl)-1H-pyrazol-5-yl]oxy}phenoxy)-1-methyl-5-(trifluoromethyl)-1H-pyrazole, 1-ethyl-3-(3-fluoro-5-{[1-methyl-3-(trifluoromethyl)-1H-pyrazol-5-yl]oxy}phenoxy)-5-(trifluoromethyl)-1H-pyrazole, pyraflufen-ethyl, imazamox,
B5 consisting of aminopyralid, benfuresate, ethofumesate, flurtamone and oxaziclomefone,
B8 consisting of aclonifen, diclofop-methyl, diclofop-P-methyl, fenoxaprop-P-ethyl, MCPA, 2,4-D, clodinafop-ethyl,
B9 consisting of bispyribac (sodium), bromacil,
B11 consisting of metamitron, metribuzin, terbuthylazine.

4. Herbicidal compositions according to any of Claims 1 to 3 additionally comprising, as component C, one or more safeners from the group consisting of benoxacor, cloquintocet-mexyl, cyprosulfamide, dichlormid, fenclorim, fenchlorazole, furilazole, isoxadifen-ethyl, mefenpyr-diethyl, 4-(dichloroacetyl)-1-oxa-4-azaspiro[4.5]decane, 2,2,5-trimethyl-3-(dechloroacetyl)-1,3-oxazolidine.

5. Method for controlling harmful plants in crops, **characterized in that** a herbicidally active amount of a herbicidal composition according to one or more of Claims 1 to 4 is applied to the harmful plants, plants, plant seeds or the area on which the plants grow.

6. Method according to Claim 5, **characterized in that** the plants are from the group of sugar cane, corn, wheat, rye, barley, oats, rice, sorghum, cotton and soybean.

7. Method according to Claim 5 or 6, **characterized in that** the plants have been genetically modified.

## Revendications

1. Compositions herbicides contenant
(A) un ou plusieurs composés de formule (I) (composant A) ou leurs sels, 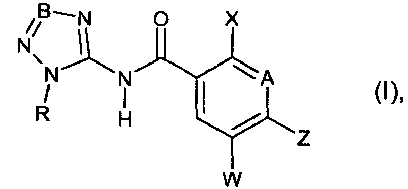 dans laquelle les symboles et indices ont les significations suivantes :
A représente CY,
B représente N,
X représente un atome de chlore,
Y représente SO₂CH₃, SOCH₃ ou SO₂Et,
Z représente un atome d'hydrogène ou le groupe méthyle,
W représente un atome d'hydrogène et
R représente le groupe méthyle,
ainsi que
(B) un ou plusieurs herbicides (composant B) choisi(s) dans les groupes B1 à B11 :
B1 des composés 1,3-dicéto, consistant en prohexadione-calcium, trinéxapac-éthyle, alloxydime, cléthodime, cycloxydime, profoxydime, séthoxydime, tépraloxydime, tralkoxydime, mésotrione, sulcotrione, téfuryltrione, tembotrione, bicyclopyrone, pinoxadène,
B2 des (sulfon)amides, consistant en
béflubutamide, bromobutide, diméthénamide, diméthénamide-P, diphénamide, napropamide, péthoxamide, N[3-chloro-4-(1-méthyléthyl)-phényl]-2-méthyl-pentanamide, naptalame, propyzamide, diflufénican, étobenzanide, flufénacet, méfénacet, méfluidide, pentanochlore, picolinafène, propanil, acide N-phénylphtalamique, acétochlore, alachlore, butachlore, diméthachlore, métazachlore, métolachlore, S-métolachlore, prétilachlore, propachlore, propisochlore, (2-chloro-6'-éthyl-N-isopropoxyméthylacéto-o-toluidide), thénylchlore,
asulame, carbaryl, carbétamide, chlorprophame, desmédiphame, phenmédiphame, prophame, butylate, cycloate, dimépipérate, EPTC, esprocarb, méthasulfocarbe, molinate, orbencarb, pébulate, prosulfocarbe, pyributicarbe, thiobencarbe, tri-allate, vernolate, amidosulfuron, azimsulfuron, bensulfuronméthyle, chlorimuron-éthyle, chlorsulfuron, cinosulfuron, cyclosulfamuron, éthametsulfuron-méthyle, éthoxysulfuron, flazasulfuron, flucétosulfuron, flupyrsulfuron-méthyle-sodium, foramsulfuron, halosulfuron-méthyle, imazosulfuron, iodosulfuron-méthyl-sodium, mésosulfuron-méthyle, metsulfuron-méthyle, monosulfuron, nicosulfuron, orthosulfamuron, oxasulfuron, primisulfuron-méthyle, prosulfuron, pyrazosulfuron-éthyle, rimsulfuron, sulfométuron-méthyle, sulfosulfuron, thifensulfuron-méthyle, triasulfuron, tribénuron-méthyle, trifloxysulfuron (sodium), triflusulfuron-méthyle, tritosulfuron, benzoate de 2-[[[[[4-méthoxy-6-(méthylthio)-2-pyrimidinyl]amino]carbonyl]amino]-sulfonyl]méthyle, flucarbazone-sodium, propoxycarbazone-sodium, thiencarbazone-méthyle, cloransulame-méthyle, diclosulame, florasulame, flumetsulame, métosulame, pénoxsulame, pyroxsulame,
B3 des arylnitriles, consistant en
bromoxynil, dichlobénil, ioxynil, pyraclonil,
B4 des azoles, consistant en
benzofénap , pyrazolynate, pyrazoxyfène, pyroxasulfone, topramézone, pyrasulfotole, 3-(3-chloro-5-{[1-méthyl-3-(trifluorométhyl)-1H-pyrazol-5-yl]oxy}phénoxy)-1-méthyl-5-(trifluorométhyl)-1H-pyrazole, 3-(3-iodo-5-{[1-méthyl-3-(trifluorométhyl)-1H-pyrazol-5-yl]oxy}-phénoxy)-1-méthyl-5-(trifluorométhyl)-1H-pyrazole, 1-éthyl-3-(3-fluoro-5-{[1-méthyl-3-(trifluorométhyl)-1H-pyrazol-5-yl]oxy}phénoxy)-5-(trifluorométhyl)-1H-pyrazole, pyraflufène-éthyle, fluazolate, isouron, isoxabène, isoxaflutole, imazaméthabenz-méthyle, imazamox, imazapic, imazapyr, imazaquine, imazéthapyr, méthazole, oxadiargyl, oxadiazone, amicarbazone, carfentrazone-éthyle, sulfentrazone, bencarbazone, amitrole, paclobutrazole, uniconazole, cafenstrole, fentrazamide,
B5 d'autres herbicides, consistant en aminocyclopyrachlore, acide N-acétylthiazolidine-4-carboxylique, acroléine, aminopyralide, pélargonate d'ammonium, sulfamate d'ammonium, aviglycine, bénazoline, benfluraline, benfurésate, bentazone, benzobicyclone, 6-benzylaminopurine, borax, butraline, carvone, catéchine, chlorflurénol-méthyle, chloridazone, chlorméquat chlorure, acide chloracétique, chlorophtalim, chlorthal-diméthyle, cinidon-éthyle, cinméthyline, clofencet, clomazone, cloxyfonac, cyanamide, cyclanilide, 6-isopentylamino-purine, kinétine, zéatine, dalapon, daminozide, dazomet, n-décanol, difenzoquat metilsulfate, 2,6-diisopropylnaphtalène, dikégulac, diméthipine, acide diméthylarsinique, dinitramine, dinoterbe, diquat dibromure, dithiopyr, DNOC, endothal, éthalfluraline, éthofumésate, éthychlozate, sulfate ferreux, flamprop-M-méthyle, flufenpyr-éthyle, flumétraline, flumiclorac-pentyle, flumioxazine, flupropanate, flurénol, fluridone, flurochloridone, flurtamone, acide gibbérellique, indanofan, isopropaline, isoprothiolane, hydrazide maléique, mépiquat chlorure, métam, acide méthylarsonique, 1-méthylcyclopropène, isothiocyanate de méthyle, mélange de nitrophénolates, acide nonanoïque, norflurazone, acide oléique, oryzaline, oxazicloméfone, paraquat dichlorure, pendiméthaline, pentachlorophénol, pentoxazone, huiles de pétrole, prodiamine, n-propyl-dihydrojasmonate, pyridate, quinoclamine, sintofène, chlorate de sodium, acide sulfurique, huiles de goudron, TCA sodique, tecnazène, thiazopyr, triacontanol, trifluraline et sulfate d'urée,
B6 des acides (Het)arylcarboxyliques, consistant en dicamba, 2,3,6-TBA,
clopyralid, fluroxypyr, inabenfide, piclorame, triclopyr,
quinclorac, quinmérac,
acide indol-3-ylacétique, acide 4-indol-3-ylbutyrique, 2-(1-naphtyl)acétamide, acide 1-naphtylacétique, acide 2-naphtyloxyacétique,
B7 des composés phosphorés organiques, consistant en anilofos, bensulide, bilanafos, butamifos, fosamine, glufosinate, sels de glufosinate, glufosinate-ammonium, glufosinate-sodium, L-glufosinate-ammonium, L-glufosinate-sodium, glyphosate, glyphosate-isopropyl-ammonium, glyphosate-ammonium, glyphosate-trimésium (= sulfosate), glyphosate-diammonium, glyphosate-potassium, pipérophos, éthéphon et tribufos,
B8 des éthers phényliques, consistant en acifluorfène-sodium, aclonifène, fluoroglycofène-éthyle, fomésafène, lactofène, oxyfluorfène, bifénox, éthoxyfène-éthyle,
cloméprop,
cloprop, dichlorprop, dichlorprop-P, mécoprop, mécoprop-P,
4-CPA, 2,4-D, MCPA, MCPA-thioéthyle,
2,4-DB, MCPB,
clodinafop-propargyle, cyhalofop-butyle, diclofop-méthyle, diclofop-P-méthyle, fénoxaprop-P-éthyle, fluazifop-butyle, fluazifop-P-butyle, haloxyfop, haloxyfop-P, métamifop,
propaquizafop, quizalofop, quizalofop-P,
B9 des pyrimidines, consistant en
ancymidol, flurprimidol, pyrimisulfan, bispyribac-sodium, pyribenzoxime, pyriminobac-méthyle, pyribambenz-isopropyle,
pyribambenz-propyle,
pyriftalide, pyrithiobac-sodium,
benzfendizone, bromacil, butafénacile, lénacile, terbacile,
2-chloro-4-fluoro-5-[3-méthyl-2,6-dioxo-4-(trifluoro-méthyl)-3,6-dihydropyrimidin-1(2H)-yl]-N-[méthyl(1-méthyléthyl)-sulfamoyl]benzamide,
B10 des (thio)urées, consistant en
cumyluron,
chlorbromuron, chlorotoluron, chloroxuron, daimuron, diflufenzopyr, diméfuron, diuron, fluométuron, forchlorfénuron, isoproturon, karbutilate, linuron, méthyldymron, métobromuron, métoxuron, monolinuron, néburon, siduron, thidiazuron
méthiuron,
tébuthiuron,
méthabenzthiazuron,
B11 des triazines, consistant en
triaziflame, indaziflame,
atrazine, cyanazine, propazine, simazine, terbuthylazine, triétazine, prométon,
amétryne, diméthamétryne, prométryne, simétryne, terbutryne,
hexazinone, métamitrone, métribuzine.

2. Compositions herbicides selon la revendication 1, contenant en tant que composant B un ou plusieurs herbicides choisis dans les groupes B1 à B11 ;
B1 consistant en cléthodime, séthoxydime, tépraloxydime, mésotrione, sulcotrione, téfuryltrione, tembotrione, bicyclopyrone, pinoxadène, tralkoxydime,
B2 consistant en diméthénamide, diméthenamide-P, napropamide, péthoxamide, propyzamide, diflufénican, flufénacet, méfénacet, picolinafène, propanil, acétochlore, alachlore, butachlore, métazachlore, métolachlore, S-métolachlore, prétilachlore, thénylchlore, asulame, carbétamide, desmédiphame, phenmédiphame, esprocarb, molinate, prosulfocarbe, thiobencarbe, amidosulfuron, chlorimuron-éthyle, cyclosulfamuron, éthoxysulfuron, flupyrsulfuron-méthyl-sodium, foramsulfuron, iodosulfuron-méthyl-sodium, mésosulfuron-méthyle, nicosulfuron, orthosulfamuron, prosulfuron, pyrazosulfuron-éthyle, rimsulfuron, trifloxysulfuron (sodium), flucarbazone-sodium, propoxycarbazone-sodium, thiencarbazone-méthyle, florasulame, métosulame, pénoxsulame, metsulfuron-méthyle, sulfosulfuron, thifensulfuron-méthyle, tribénuron-méthyle, tritosulfuron, pyroxsulame,
B3 consistant en bromoxynil et ioxynil.
B4 consistant en benzofénap, topramézone, pyrasulfotole, isoxaflutole, imazamox, imazéthapyr, oxadiargyl, oxadiazone, amicarbazone, carfentrazone-éthyle, sulfentrazone, uniconazole, cafenstrole, fentrazamide, 3-(3-chloro-5-{[1-méthyl-3-(trifluoro-méthyl)-1H-pyrazol-5-yl]oxy}phénoxy)-1-méthyl-5-(trifluorométhyl)-1H-pyrazole, 3-(3-iodo-5-{[1-méthyl-3-(trifluorométhyl)-1H-pyrazol-5-yl]oxy}phénoxy)-1-méthyl-5-(trifluorométhyl)-1H-pyrazole, 1-éthyl-3-(3-fluoro-5-{[1-méthyl-3-(trifluorométhyl)-1H-pyrazol-5-yl]oxy}phénoxy)-5-(trifluorométhyl)-1H-pyrazole, pyraflufène-éthyle,
B5 consistant en aminopyralide, bénazoline, benfurésate, bentazone, cinidon-éthyle, clomazone, diquat dibromure, éthofumésate, flumiclorac-pentyle, flumioxazine, flurtamone, oxazicloméfone, pendiméthaline, pyridate et trifluraline,
B6 consistant en dicamba, clopyralid, fluroxypyr, picloram, triclopyr, quinclorac,
B7 consistant en anilofos, glufosinate-ammonium et L-glufosinate-ammonium, glyphosate, glyphosate-isopropyl-ammonium, glyphosate-ammonium, glyphosate-trimésium (= sulfosate), glyphosate-diammonium, glyphosate-potassium,
B8 consistant en acifluorfène-sodium, aclonifène, fluoroglycofène-éthyle, oxyfluorfène, bifénox, dichlorprop-P, mécoprop-P, 2,4-D, MCPA, clodinafop-propargyle, cyhalofop-butyle, diclofop-méthyle, diclofop-P-méthyle, fénoxaprop-P-éthyle, fluazifop-P-butyle, quizalofop-P,
B9 consistant en bispyribac (sodium), pyriftalid, bromacile,
lénacile, 2-chloro-4-fluoro-5-[3-méthyl-2,6-dioxo-4-(trifluorométhyl)-3,6-dihydropyrimidin-1(2H)-yl]-N-[méthyl(1-méthyléthyl)-sulfamoyl]benzamide,
B10 consistant en cumyluron, daimuron, diuron, isoproturon, diflufenzopyr,
B11 consistant en atrazine, simazine, terbuthylazine, amétryne, terbutryne, métamitrone, métribuzine.

3. Compositions herbicides selon la revendication 1 ou 2, contenant en tant que composant B un ou plusieurs herbicides choisis dans les groupes B1, B2, B4, B5, B8, B9 et B11 :
B1 consistant en cléthodime, sulcotrione, téfuryltrione, tembotrione, bicyclopyrone, pinoxadène,
B2 consistant en diméthénamide-P, napropamide, diflufénican, flufénacet, méfénacet, acétochlore, métazachlore, S-métolachlore, asulame, desmédiphame, phenmédiphame, molinate, prosulfocarbe, amidosulfuron, éthoxysulfuron, foramsulfuron, iodosulfuron-méthyl-sodium, mésosulfuron-méthyle, flucarbazone-sodium, propoxycarbazone-sodium, thiencarbazone-méthyle, florasulame, métosulame, metsulfuron-méthyle, sulfosulfuron, thifensulfuron-méthyle, tribénuron-méthyle, tritosulfuron, pyroxsulame,
B4 consistant en pyrasulfotole, isoxaflutole, oxadiargyl, oxadiazone, amicarbazone, fentrazamide, 3-(3-chloro-5-{[1-méthyl-3-(trifluorométhyl)-1H-pyrazol-5-yl]oxy}phénoxy)-1-méthyl-5-(trifluorométhyl)-1-H-pyrazole, 3-(3-iodo-5-{[1-méthyl-3-(trifluoro-méthyl)-1H-pyrazol-5-yl]oxy}phénoxy)-1-méthyl-5-(trifluorométhyl)-1H-pyrazole, 1-éthyl-3-(3-fluoro-5-{[1-méthyl-3-(trifluorométhyl)-1H-pyrazol-5-yl]oxy}-phénoxy)-5-(trifluorométhyl)-1H-pyrazole, pyraflufène-éthyle, imazamox,
B5 consistant en aminopyralide, benfurésate, éthofumésate, flurtamone et oxazicloméfone,
B8 consistant en aclonifène, diclofop-méthyle, diclofop-P-méthyle, fénoxaprop-P-éthyle, MCPA, 2,4-D, clodinafop-éthyle,
B9 consistant en bispyribac (sodium), bromacil,
B11 consistant en métamitrone, métribuzine, terbuthylazine.

4. Compositions herbicides selon l'une quelconque des revendications 1 à 3, contenant en plus comme composant C un ou plusieurs phytoprotecteurs choisis dans le groupe consistant en bénoxacor, cloquintocetmexyle, cyprosulfamide, dichlormide, fenclorim, fenchlorazole, furilazole, isoxadifène-éthyle, méfenpyr-diéthyle, 4-(dichloracétyl)-1-oxa-4-azaspiro[4.5]décane, 2,2,5-triméthyl-3-(dichloracétyl)-1,3-oxazolidine.

5. Procédé pour la lutte contre des plantes nuisibles dans des cultures, **caractérisé en ce qu'**on applique une quantité à efficacité herbicide d'une composition herbicide selon une ou plusieurs des revendications 1 à 4 sur les plantes nuisibles, les plantes, les semences de plantes ou l'aire sur laquelle poussent les plantes.

6. Procédé selon la revendication 5, **caractérisé en ce que** les plantes sont choisies dans le groupe constitué par la canne à sucre, le maïs, le blé, le seigle, l'orge, l'avoine, le riz, le sorgho, le cotonnier et le soja.

7. Procédé selon la revendication 5 ou 6, **caractérisé en ce que** les plantes sont génétiquement modifiées.
